(19) Europäisches Patentamt / European Patent Office / Office européen des brevets

(11) **EP 3 424 650 B1**

(12) **EUROPEAN PATENT SPECIFICATION**

(45) Date of publication and mention of the grant of the patent:
**21.12.2022 Bulletin 2022/51**

(21) Application number: **17180267.1**

(22) Date of filing: **07.07.2017**

(51) International Patent Classification (IPC):
**B25J 9/16** $^{(2006.01)}$

(52) Cooperative Patent Classification (CPC):
**B25J 9/163**; G05B 2219/39297; G05B 2219/39298

(54) **A METHOD AND APPARATUS FOR PERFORMING CONTROL OF A MOVEMENT OF A ROBOT ARM**

VERFAHREN UND VORRICHTUNG ZUR AUSFÜHRUNG DER STEUERUNG EINER BEWEGUNG EINES ROBOTERARMS

UN PROCÉDÉ ET UN APPAREIL PERMETTANT DE RÉALISER LA COMMANDE D'UN MOUVEMENT D'UN BRAS DE ROBOT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.01.2019 Bulletin 2019/02**

(73) Proprietor: **Siemens Aktiengesellschaft**
**80333 München (DE)**

(72) Inventors:
• **Baier, Stephan**
**82008 Unterhaching (DE)**

• **Tresp, Volker**
**81369 München (DE)**

(56) References cited:
**US-A1- 2016 221 189**

• **ZHOU CHENG ET AL: "Motion planning for redundant free-floating space robot with local optimization of reaction torque and joint torque simultaneously", 2016 IEEE INTERNATIONAL CONFERENCE ON ROBOTICS AND BIOMIMETICS (ROBIO), IEEE, 3 December 2016 (2016-12-03), pages 344-349, XP033071466, DOI: 10.1109/ROBIO.2016.7866346 [retrieved on 2017-02-27]**

**Description**

The invention relates to a method and apparatus for computing joint torques applied by actuators to perform a control of a movement of a robot arm having several degrees of freedom.

A robot arm which may be used in a production facility can comprise several joints providing several degrees of freedom for the movement of the robot arm. Within model-based robot control, an inverse dynamics model can be used to compute the necessary joint torques of actuators of the robot arm for the execution of a desired movement of the respective robot arm. A feedforward control command can be calculated using a rigid-body formulation using vectors of joint positions, joint velocities, and joint accelerations. However, in practice, many nonlinearities such as friction or actuator forces can have an impact on the movement of the robot arm. Consequently, nonlinear regression techniques show a superior performance in inferring required joint torques for feedforward robot control of a robot arm. The movement of a robot arm is specified as positions, velocities and accelerations for all degrees of freedom of the robot arm. The goal is to estimate a function from the desired movement of the robot arm to the required joint torques. Parameters of the function can be estimated offline using collected trajectories of the robot arm.

US 2016/0221189 A1 describes a method and system for determining at least one property associated with a selected axis of a manipulator. The elasticity of the links and of the manipulator can be modeled and the resulting compliance can be determined. Depending on the complexity of the manipulator and the number of properties that are of interest, the manipulator is controlled to a plurality of different kinematic configurations in which configurations the quantities are de termined. A stiffness matrix for each component of the manipulator can be determined and a global stiffness matrix for the total manipulator can be determined in order to determine at least one property of the selected axis.

Accordingly, it is an object of the present invention to provide a method and apparatus for performing an accurate control of a movement of a robot arm where the movement of the robot arm is controlled precisely and which shows good performance even in case of nonlinearities of forces having an impact on the movement of the robot arm.

This object is achieved according to a first aspect of the present invention by a method for computing joint torques applied by actuators to perform a control of a movement of a robot arm having several degrees of freedom comprising the features of claim 1.

The invention provides according to the first aspect a method for computing joint torques applied by actuators to perform a control of a movement of a robot arm having several degrees of freedom,
wherein the method comprises the steps of:

provide by a trajectory generator trajectory vectors specifying a desired trajectory comprising a position, velocity and acceleration of the robot arm for each degree of freedom,
mapping the trajectory vectors into corresponding latent representation vectors which capture inherent properties of the robot arm using basis functions with trained parameters, wherein the basis functions (A) are functions which are trained on a data set comprising joint torques (t) and corresponding trajectories of the robot arm, and multiplying the latent representation vectors with trained core tensors to compute the joint torques for each degree of freedom, wherein the number of trained core tensors corresponds to the number of degrees of freedom of the robot arm to be controlled.

In a possible embodiment of the method according to the first aspect of the present invention, trajectory vectors specifying a monitored current trajectory of the robot arm are also fedback and compared with the trajectory vectors specifying a desired trajectory of the robot arm to calculate tracking errors and to provide a feedback control of the robot arm based on the calculated tracking errors.

In a further possible embodiment of the method according to the first aspect of the present invention, each joint torque is calculated as the sum over the weighted outer product of the latent representation vectors.

In a further possible alternative embodiment each joint torque is calculated as the weighted inner product of the latent representation vectors.

In a still further possible embodiment of the method according to the first aspect of the present invention, the basis functions comprise continuous basis functions.

In a possible embodiment of the method according to the first aspect of the present invention, the basis functions comprise Gaussian basis functions.

In a further possible embodiment of the method according to the first aspect of the present invention, the basis functions comprise linear basis functions.

In a still further possible embodiment of the method according to the first aspect of the present invention, the basis functions comprise polynomial basis functions.

In a further possible embodiment of the method according to the first aspect of the present invention, the trajectory vectors comprise a joint position vector of joint positions, a joint velocity vector of joint velocities and/or a joint acceleration vector of joint accelerations.

In a possible embodiment of the method according to the first aspect of the present invention, the basis functions and the core tensors are trained on a data set comprising joint torques and corresponding trajectories.

In a still further possible embodiment, the data set is collected during movement of the robot arm.

In a still further possible embodiment of the method according to the first aspect of the present invention, the basis functions are trained using a maximum likelihood approach.

In a still further possible embodiment of the method according to the first aspect of the present invention, the computed joint torques are applied to joints of the robot arm by actuators to perform a feedforward or a feedback control of the movement of the robot arm.

The invention further provides according to a second aspect a controller for performing a control of a movement of a robot arm having several degrees of freedom comprising the features of claim 11.

The invention provides according to the second aspect a controller for performing a control of a movement of a robot arm having several degrees of freedom,
said control apparatus comprising:

a trajectory generator which is configured to provide trajectory vectors specifying a desired trajectory comprising a position, velocity and acceleration of the robot arm for each degree of freedom; and
a computation unit adapted to map the generated trajectory vectors into corresponding latent representation vectors which capture inherent properties of the robot arm using basis functions with trained parameters, wherein the basis functions (A) are functions which are trained on a data set comprising joint torques (t) and corresponding trajectories of the robot arm, and further configured to multiply the latent representation vectors with trained core tensors to compute the joint torques for each degree of freedom, wherein the number of trained core tensors corresponds to the number of degrees of freedom of the robot arm to be controlled.

In a possible embodiment of the controller according to the second aspect of the present invention, the controller is connected to actuators controlled by the controller and configured to apply the computed joint torques to joints of said robot arm to control its movement.

The invention further provides according to a third aspect a robotic system comprising the features of claim 13.

The invention provides according to the third aspect a robotic system comprising at least one robot arm having joints to which joint torques are applied by actuators connected to and controlled by a controller according to the second aspect of the present invention.

In a possible embodiment of the robotic system according to the third aspect of the present invention, the controller is adapted to perform a feedforward control of the movement of the robot arm of said robotic system.

In a further alternative embodiment of the robotic system according to the second aspect of the present invention, the controller is adapted to perform a feedback control of the movement of the robot arm of said robotic system.

In the following, possible embodiments of the different aspects of the present invention are described in more detail with reference to the enclosed figures.

Fig. 1     shows a flowchart of a possible exemplary embodiment of a method for computing joint torques according to the first aspect of the present invention;

Fig. 2     shows a block diagram of a possible exemplary embodiment of a controller for performing a control of a movement of a robot arm according to the second aspect of the present invention;

Fig. 3     shows a schematic diagram for illustrating the operation of the method and apparatus according to the present invention.

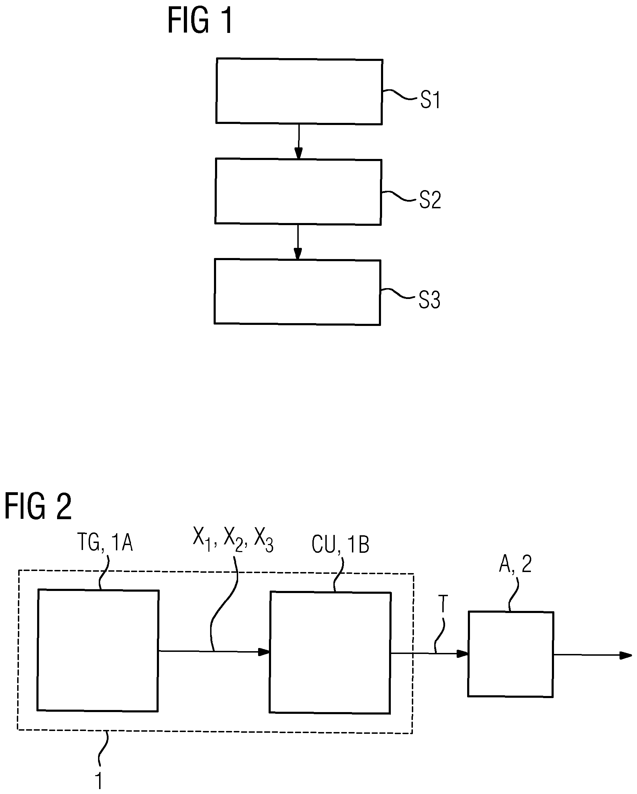

As can be seen in the flowchart of Fig. 1, the method according to the first aspect of the present invention for computing joint torques applied by actuators to perform a control of a movement of a robot arm having several degrees of freedom can comprise several main steps.

In a first step S1, trajectory vectors x can be provided by a trajectory generator wherein the trajectory vectors x specify a desired trajectory of the robot arm for each degree of freedom. The desired trajectory comprises a position, velocity and acceleration of the robot arm for each degree of freedom, DoF.

In a second step S2, the provided trajectory vectors x are mapped to corresponding latent representation vectors a which capture inherent properties of the robot arm using basis functions A with trained parameters.

In a further step S3, the latent representation vectors a are multiplied with trained core tensors G to compute joint torques t for each degree of freedom, DoF.

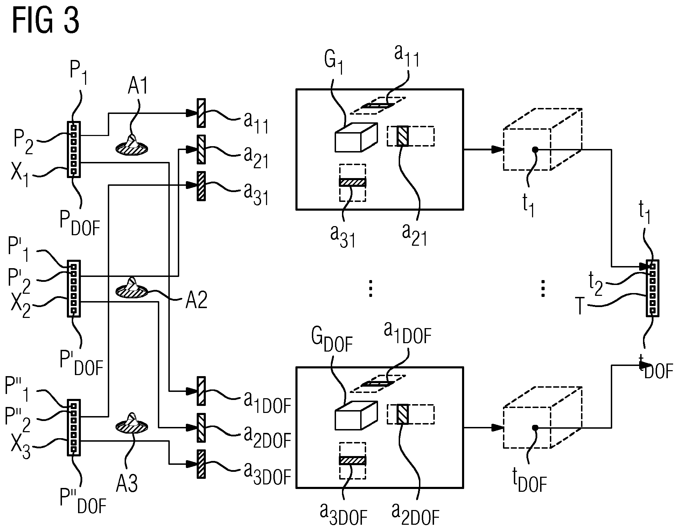

These main steps S1, S2, S3 are also illustrated schematically in Fig. 3. The trajectory vectors x can comprise in a possible exemplary embodiment three different vectors $x_1, x_2, x_3$.

The first vector x1 is a joint position vector indicating the joint positions of all joints of the robot arm to be controlled. The joint position vector x1 includes a number of joint positions p corresponding to the degree of freedom DoF of the robot arm. The joint position vector x1 includes the positions P of all joints of the robot arm to be controlled.

The trajectory vectors further comprise a second vector x2 which is a joint velocity vector including all velocities $\dot{p}$ of the joints of the robot arm to be controlled.

The third trajectory vector x3 is a joint acceleration vector including all joint accelerations $\ddot{p}$ of the joints of the robot arm to be controlled.

The trajectory vectors x1, x2, x3 specify a desired trajectory of the robot arm for each degree of freedom. The trajectory vectors x1, x2, x3 are generated in a preferred embodiment by a trajectory generator in step S1.

The provided trajectory vectors x1, x2, x3 are mapped in the second step S2 automatically to corresponding latent representation vectors a, which capture inherent properties of the robot arm using basis functions A1, A2, A3 with trained parameters. These basis functions A can comprise in possible embodiments Gaussian basis functions, linear basis functions and/or polynomial basis functions. Basis functions A are continuous basis functions which are trained on a data set comprising joint torques t and corresponding trajectories of the robot arm. This data set can be collected during movement of the robot arm. In a possible embodiment, the basis functions A can be trained using a maximum likelihood approach.

In step S3, the latent representation vectors a are multiplied with trained core tensors G to compute the joint torques t for each degree of freedom DoF as also illustrated in Fig. 3. The number of trained core tensors G corresponds to the number of degrees of freedom DoF of the robot arm to be controlled. The result is a torque sensor T comprising the joint torques t1, t2 to $t_{DoF}$ for each robot arm joint. The computed joint torques t of the torque vector T are applied to joints of the robot arm by actuators such as step motors to perform a feedforward or a feedback control of the movement of the robot arm.

In a possible embodiment, each joint torque t is calculated in step S3 as the sum over the weighted outer product of the latent representation vectors a. In an alternative embodiment, each joint torque t is calculated in step S3 as the weighted inner product of the latent representation vectors a.

In a possible embodiment, the trajectory vectors m specifying a monitored current trajectory of the robot arm are fedback and compared with the trajectory vectors specifying a desired trajectory of the robot arm to calculate tracking errors e and to provide a feedback control of the robot arm based on the calculated tracking errors e. In this embodiment, the current trajectory of the robot arm is monitored by using sensors attached to the robot arm or deployed in the vicinity of the robot arm. From the sensor data, a trajectory vector specifying a current trajectory of the robot arm is calculated and fedback for comparison with the trajectory vector x generated by the trajectory generator which specifies a desired trajectory of the robot arm. By comparing the monitored trajectory vectors with the generated desired trajectory vectors, tracking errors e can be calculated to provide a feedback control to the robot arm based on the calculated tracking errors e. Accordingly, the method according to the first aspect of the present invention can be used for a feedforward control or for a feedback control of the robot arm.

Fig. 2 shows a block diagram of a possible exemplary embodiment of a controller for performing a control of a movement of a robot arm having several degrees of freedom DoF according to the second aspect of the present invention.

In the illustrated exemplary embodiment, the control apparatus 1 comprises two main components. In the illustrated embodiment, the controller 1 comprises a trajectory generator 1A which is configured to provide trajectory vectors x specifying a desired trajectory of the robot arm for each degree of freedom DoF. The control apparatus 1 further comprises a computation unit 1B adapted to map the generated trajectory vectors x received from the trajectory generator 1A to corresponding latent representations a which capture inherent properties of the robot arm using basis functions A with trained parameters. The computation unit 1B is further configured to multiply the latent representation vectors a with trained core tensors G to compute the joint torques t for each degree of freedom DoF of the robot arm. As illustrated in Fig. 2, a computation unit 1B can output a torque vector T including the joint torques t for each degree of freedom DoF of the robot arm to corresponding actuators 2. The controller 1 is connected to the actuators 2 which are controlled by the controller and which are configured to apply the computed joint torques t of the calculated torque vector T to joints of the robot arm to control its movements in a three-dimensional space.

In a possible embodiment, the movement of the robot arm is controlled in a feedforward control by the forces F applied by the actuators 2 to its joints without feedback. In an alternative embodiment, a current trajectory of the robot arm is monitored using sensors and fedback to the controller 1. In this embodiment, the computation unit 1B of the controller 1 can comprise a comparator which compares the trajectory vectors x generated by the trajectory generator 1A specifying a desired trajectory of the robot arm with the fedback monitored current trajectory of the robot arm. By comparing the desired trajectory vectors with the monitored trajectory vectors, tracking errors e can be calculated by the computation unit 1B to provide a feedback control of the robot arm based on the calculated tracking errors e.

The method and control apparatus according to the present invention is based on an approach of decomposing sparse tensors. The method and control apparatus exploit the inherent three-way interaction of *positions p x velocities $\dot{p}$ x accelerations $\ddot{p}$.* The method uses basis functions A that can map continuous inputs to latent representations a of the tensor decompositions. In this way, functional versions of the tensor decompositions can be retrieved. The basis functions A also imply smoothness of the inputs such that the used data model is able to generalize well in spite of the sparsity. By using multivariate basis functions A, it is possible to group inputs, such that the dimensionality of the tensor decompositions can be reduced. In the employed inverse dynamics model, the joint positions, velocities and accelerations of all degrees of freedom DoF of the robot arm are grouped resulting in a tensor Y of dimension three. This allows to apply a Tucker decomposition. The number of degrees of freedom DoF of the robot arm can vary depending on the use case.

Tensor decompositions form a generalization of a low rank matrix factorization to higher order tensors. There are different ways of decomposing a higher order tensor.

The Tucker decomposition factorizes a tensor $Y \in \mathbb{R}^{d_1 x \dots x d_S}$ into S matrices, including latent representation for all entities in each mode. The tensor elements are expressed by the interaction of the latent representations, weighted by a core tensor $G \in \mathbb{R}^{\tilde{r} x \dots x \tilde{r}}$ such that

$$Y(v_1, \dots, v_S) \approx \sum_{r_1, \dots, r_S}^{\tilde{r}} G(r_1, \dots r_S) \cdot A_1(v_1, r_1) \cdot A_2(v_2, r_2) \cdot \dots \cdot A_S(v_S, r_S)$$

$$(1)$$

with $A_i \in \mathbb{R}^{d_i x \tilde{r}}$. The Tucker decomposition does not scale to high dimensions, as the core tensor G grows exponentially with the dimensionality of the tensor.

A special case of the Tucker decomposition is the low-rank PARAFAC decomposition, where the core tensor G is diagonal. All other interactions are left out, such that

$$Y(v_1, v_2, \dots, v_S) \approx \sum_{r=1}^{\tilde{r}} g(r) \cdot A_1(v_1, r) \cdot A_2(v_2, r) \cdot \dots \cdot A_S(v_S, r)$$

$$(2)$$

with $g \in \mathbb{R}^{\tilde{r}}$. As PARAFAC only models the diagonal of the core tensor G, its parameters scale linearly with the order of the tensor.

A regression problem is considered with $S \in \mathbb{N}$ discrete input variables. Each of the input variables $v_i$ for $i \in \{1, \dots, S\}$ assumes one out of $F_i \in \mathbb{N}$ discrete values. Furthermore, a dependent variable $y$ is considered A regression function for a data set of N training examples $\left\{ y^j, (v_1^j, \dots, v_S^j) \right\}_{j=1}^N$ is provided.

All training data samples are mapped to a sparse tensor $Y \in \mathbb{R}^{F_1 x \dots x F_S}$. The tensor is filled with

$$Y\left(v_1^j, \dots, v_S^j\right) = y^j \ \forall_j \in \{1, \dots, N\}$$

$$(3)$$

The remaining entries of the tensor, which do not occur in the training data, are left unknown. This results in $Y$ being a sparse tensor.

The tensor $Y$ is approximated using a low-rank tensor decomposition, e.g. the PARAFAC decomposition (see equation (2)). Using low ranks for $\tilde{r}$, the approximation results in a dense tensor $\Phi$. It describes the outcome $Y$ for all combinations of the input variables $(v_1, \dots, v_s)$. However, it is difficult to compute and store the whole approximated tensor $\Phi$; thus, only the parameters of the decomposition are stored. When predicting $Y$ for a new set of input variables, the representations for that tuple are indexed, and the approximation can be computed on demand.

The proposed model so far only works for a discrete input space. Furthermore, it does not yet imply any smoothness on the values of the input variables. Although, this makes it a powerful, highly non-linear model, it is prone to overfitting. If the input values follow a natural ordering, or if they are discretized from a continuous scale, the model requires more training samples to learn the smoothness implicitly. To introduce smoothness explicitly and to extend the model to continuous inputs, smooth basis functions A for the latent parameters of the decomposition are used. Instead of indexing the latent representation from a matrix, their values are computed using basis functions A. For example, all $A_i$ in equation (2) can be modeled using a radial basis function

$$A_i(v_i, r_i) = cxp(-\gamma_{i,r_i} \|\mu_{i,r_i} - v_i\|^2) \qquad (4)$$

This allows for continuous inputs $v_i \in \mathbb{R}$ . The latent representation is modeled based on the closeness of the input to the center of the radial basis function A. In this way, similar inputs induce similar representations. The parameters of the basis function A are optimized during training, to yield optimal regression results. The chosen low rank $\tilde{r}$ is a hyperparameter, which determines the number of basis functions A and therefore the model complexity. Also a mixture of discrete and continuous inputs can easily be modeled and used by applying the basis functions A only to continuous inputs, and learning representation matrices for the discrete input variables. It is also possible to group multiple inputs together into one tensor mode, such that $v_i \in \mathbb{R}^m$ , where $m \in \mathbb{N}$ denotes the number of grouped inputs. In this way, the representation of a tensor mode is calculated given a vector of continuous inputs. The grouping of input variables reduces the dimensionality of the tensor decomposition, and thus the number of free parameters.

A functional Tucker model for the approximation of the joint torques t, necessary to perform a movement of a robot arm can be used. Fig. 3 shows the model schematically. A robot arm with $c \in \mathbb{N}$ degrees of freedom DoF is considered. The vectors $x_1, x_2, x_3$ describe the desired positions p, velocities $\dot{p}$, and accelerations $\ddot{p}$ for each of the c DoFs. The vector $y \in \mathbb{R}^c$ describes the corresponding joint torques t.

The function $y = f(x_1, x_2, x_3)$ can be modeled using a functional tensor decomposition model. Each input vector x is modeled by one dimension in the tensor decomposition, resulting in third-order tensors $Y$, which describe the joint torques t. Each element of the vector y can be modeled in a separate model. The resulting three-dimensional tensors of the form *positions x velocities x accelerations* are then factorized using the Tucker decomposition with limited rank, resulting in a tensor $\Phi \approx Y$, such that

$$\Phi(x_1, x_2, x_3) = \sum_{r_1, r_2, r_3}^{\tilde{r}} \mathcal{G}(r_1, r_2, r_3) \cdot A_1(x_1, r_1) \cdot A_2(x_2, r_2) A_3(x_3, r_3) \qquad (5)$$

Wherein $A_1$ to $A_3$ are basic functions, which map from the c-dimensional input to the latent representations of the Tucker model. The representations can be modeled using multivariate Gaussian kernels, such that

$$A_i(x_i, r_i) = \exp\left(-(\mu_{i,r_i} - x_i)^T D_{i,r_i}(\mu_{i,r_i} - x_i)\right) \ \forall_i \in \{1, 2, 3\}, \qquad (6)$$

with $\mu_{i,r_i} \in \mathbb{R}^c$ representing the centers and $D_{i,r_i} \in \mathbb{R}^{cxc}$ weighting the distance from the centers in the c-dimensional input space. The closer a data point is to the center of a basis function A, the higher is its activation. Thus, the centers of the basis functions A can be seen as landmarks in the input space. All three-way interactions between the representations of the three input dimensions, are explicitly modeled and weighted by the elements of the core tensor G.

Model training can be based on a maximum likelihood approach. The negative log-likelihood of the collected data set $\left\{y^j, (x_1^j, x_2^j, x_3^j)\right\}_{j=1}^N$ is minimized as follows:

$$l = \log \sum_{j=1}^{N} p\left(y^j \big| x_i^j, x_2^j, x_3^j, \Theta\right),$$

$$(7)$$

where $\Theta$ includes the parameters of the decomposition and the basis functions A. Assuming a Gaussian distribution, one gets the squared error cost function

$$C = \sum_{j=1}^{N} (Y(x_1^j, x_2^j, x_3^j) - \Phi(x_1^j, x_2^j, x_3^j))^2$$

$$(8)$$

The cost function C considers only known elements of the tensor, i.e., the sparsity of the tensor is exploited. Equation (8) can be minimized using gradient descent. As experimentally found the stochastic optimization algorithm Adam works best for this task. Adam dynamically optimizes the learning rate, individually for each parameter. The sampling of stochastic mini-batches for each update has also shown advantageous for speeding up training. To avoid overfitting, the training can be stopped when the performance on a validation set does not further improve.

The centers of the Gaussian kernel can be initialied in a preprocessing step, using k-means clusterings, such that

$$J_i = \sum_{r_i}^{\tilde{r}} \sum_{x_i^j \in C_{i,r_i}} \left\| x_i^j - \mu_{i,r_i} \right\|^2$$

$$(9)$$

are minimized for $i \in \{1, ...,3\}$, where $C$ contains $\tilde{r}$ clusters for each of the three modes. All matrices D are initialized with the identity matrix. The elements of the core tensor G can be initialized randomly with a Gaussian distribution of mean zero and standard deviation 0.05. While training all parameters are further optimized.

The number of degrees of freedom DoF can vary according to the use case. For instance, a robot arm may comprise seven degrees of freedom. Further, data can be collected from the moving robot arm at varying sampling rates. The data can e.g. be collected from the moving robot at a frequency of 100 Hz for a time period of 7.5 minutes of movement. Such a dataset includes 21 input dimensions consisting of seven joint positions, seven joint velocities and seven joint accelerations. In this specific example, a first trajectory vector x1 comprises seven position values p indicating the seven positions of the seven joints, the second trajectory vector x2 comprises seven velocity values $\dot{p}$ indicating the seven velocities of the seven joints and the third trajectory vector x3 comprises seven joint acceleration values $\ddot{p}$ indicating the accelerations of the seven joints of the robot arm. With the above-mentioned sampling rate, the complete data set consists in this specific example of 42482 samples. The data set can be split in a possible embodiment into a training data set and into a test data set. For instance, 90 % of the received data set can be used for training and 10 % of the received data set can be used as test data. Further, a percentage of the training set can be used as a validation data set. The model is learned on the training data set which models the seven joint torques t given its positions, velocities and accelerations. As baseline models, it is possible to consider linear regression, RBF-networks, as well as support vector regression. Using the Tucker decomposition of a high dimensional sparse tensor allows for modeling a three-way interaction (positions x velocities x accelerations). In a possible embodiment, using stochastic gradient descent for training allows to only consider known elements in the tensor. This increases the computational feasibility of the decomposition. The use of basis functions A such as a Gaussian kernel allows for a mapping from continuous inputs to the latent representation a of the tensor decomposition. Further, the used basis functions A introduce smoothness such that similar inputs induce similar latent representations.

The method and controller according to the present invention allow for a more accurate feedforward robot control of the robot arm. This can further result in lower feedback gains and potentially less energy consumption when moving the robot arm. The method can also be used to reduce the engineering effort for tuning feedback controllers. The accurate feedforward robot control provided by the method according to the first aspect of the present invention can be beneficial for example for production robots or CNC machines.

Any tensor decomposition model can be used for the proposed method according to the first aspect of the present invention, e.g. PARAFAC, Tucker2. For parameter optimization, various techniques can be used, e.g. variants of stochastic gradient descent (e.g. RMSprop, Adam, etc.), alternating least squares or second order methods. With the method according to the present invention, a regression model is used based on tensor factorization for modeling an inverse dynamics function. The method is based on a decomposition of sparse tensors which comprise only a small number of entries. Representing the data with high dimensional sparse tensors Y forms the basis for the approximation of complex highly nonlinear functions. The decomposition of sparse tensors can be applied to a regression problem. With the method according to the present invention, the decomposition is applied to continuous inputs by learning or mapping from the continuous inputs to the latent representations a of the tensor decomposition using basis functions A. The method can be applied to a data set that consists of trajectories of a robot arm having several degrees of freedom DoF.

**Claims**

1. A method for computing joint torques applied by actuators to perform a control of a movement of a robot arm having several degrees of freedom (DoF),
   **characterized in that** the method comprises the steps of:

   (a) providing (S1) by a trajectory generator trajectory vectors (x) specifying a desired trajectory comprising a position, velocity and acceleration of the robot arm for each degree of freedom (DoF);
   (b) mapping (S2) the trajectory vectors (x) into corresponding latent representation vectors (a) which capture inherent properties of the robot arm using basis functions (A) with trained parameters, wherein the basis functions (A) are functions which are trained on a data set comprising joint torques (t) and corresponding trajectories of the robot arm;
   (c) multiplying (S3) the latent representation vectors (a) with trained core tensors (G) to compute the joint torques (t) for each degree of freedom (DoF) wherein the number of trained core tensors (G) corresponds to the number of degrees of freedom (DoF) of the robot arm to be controlled.

2. The method according to claim 1 wherein each joint torque (t) is calculated as the sum over the weighted outer product of the latent representation vectors (a).

3. The method according to claim 1 wherein each joint torque (t) is calculated as the weighted inner product of the latent representation vectors (a).

4. The method according to any of the preceding claims 1 to 3 wherein the basis functions (A) comprise continuous basis functions.

5. The method according to claim 4 wherein the basis functions (A) comprise

   Gaussian basis functions,
   linear basis functions and/or
   polynomial basis functions.

6. The method according to any of the preceding claims 1 to 5 wherein the trajectory vectors (x) comprise

   a joint position vector ($x_1$),
   a joint velocity vector ($x_2$), and/or
   a joint acceleration vector ($x_3$).

7. The method according to any of the preceding claims 1 to 6 wherein the basis functions (A) and the core tensors (G) are trained on a data set comprising joint torques (t) and corresponding trajectories.

8. The method according to claim 7 wherein the data set is collected during movement of the robot arm.

9. The method according to claim 7 wherein the basis functions (A) are trained using a maximum likelihood approach.

10. The method according to any of the preceding claims 1 to 9 wherein the computed joint torques (t) are applied to joints of the robot arm by actuators to perform a feedforward or a feedback control of the movement of the robot arm.

11. A controller for performing a control of a movement of a robot arm having several degrees of freedom (DoF) **characterized in that** said controller (1) comprises:

(a) a trajectory generator (1A) which is configured to provide trajectory vectors (x) specifying a desired trajectory comprising a position, velocity and acceleration of the robot arm for each degree of freedom (DoF);
(b) a computation unit (1B) adapted to map the generated trajectory vectors (x) into corresponding latent representation vectors (a) which capture inherent properties of the robot arm using basis functions (A) with trained parameters, wherein the basis functions (A) are functions which are trained on a data set comprising joint torques (t) and corresponding trajectories of the robot arm, and further configured to multiply the latent representation vectors (a) with trained core tensors (G) to compute the joint torques (t) for each degree of freedom (DoF) wherein the number of trained core tensors (G) corresponds to the number of degrees of freedom (DoF) of the robot arm to be controlled.

12. The controller according to claim 11 wherein the controller (1) is connected to actuators (2) controlled by the controller (1) and configured to apply the computed joint torques (t) to joints of said robot arm to control its movement.

13. A robotic system comprising at least one robot arm having joints to which joint torques (t) are applied by actuators (2) comprised by the robotic system, and connected to and controlled by a controller (1) according to claim 11 or 12.

14. The robotic system according to claim 13 wherein the controller (1) is adapted to perform a feedforward or a feedback control of the movement of the robot arm of said robotic system.

**Patentansprüche**

1. Verfahren zum Berechnen von Gelenkdrehmomenten, die von Aktuatoren angewendet werden, um eine Steuerung einer Bewegung eines Roboterarms, der mehrere Freiheitsgrade (DoF) aufweist, auszuführen, **dadurch gekennzeichnet, dass** das Verfahren die folgenden Schritte umfasst:

(a) Bereitstellen (S1) von Trajektorienvektoren (x) durch einen Trajektoriengenerator, die eine gewünschte Trajektorie spezifizieren, die eine Position, Geschwindigkeit und Beschleunigung des Roboterarms für jeden Freiheitsgrad (DoF) umfasst;
(b) Abbilden (S2) der Trajektorienvektoren (x) in entsprechende latente Darstellungsvektoren (a), welche inhärente Eigenschaften des Roboterarms unter Verwendung von Basisfunktionen (A) mit trainierten Parametern erfassen, wobei die Basisfunktionen (A) Funktionen sind, welche auf einem Datensatz trainiert sind, der Gelenkdrehmomente (t) und entsprechende Trajektorien des Roboterarms umfasst;
(c) Multiplizieren (S3) der latenten Darstellungsvektoren (a) mit trainierten Kerntensoren (G), um die Gelenkdrehmomente (t) für jeden Freiheitsgrad (DoF) zu berechnen, wobei die Anzahl der trainierten Kerntensoren (G) der Anzahl von Freiheitsgraden (DoF) des zu steuernden Roboterarms entspricht.

2. Verfahren nach Anspruch 1, wobei jedes Gelenkdrehmoment (t) als die Summe über dem gewichteten äußeren Produkt der latenten Darstellungsvektoren (a) berechnet wird.

3. Verfahren nach Anspruch 1, wobei jedes Gelenkdrehmoment (t) als das gewichtete innere Produkt der latenten Darstellungsvektoren (a) berechnet wird.

4. Verfahren nach einem der vorhergehenden Ansprüche 1 bis 3, wobei die Basisfunktionen (A) kontinuierliche Basisfunktionen umfassen.

5. Verfahren nach Anspruch 4, wobei die Basisfunktionen (A) Folgendes umfassen

Gaußsche Basisfunktionen,
lineare Basisfunktionen und/oder
polynomische Basisfunktionen.

6. Verfahren nach einem der vorhergehenden Ansprüche 1 bis 5, wobei die Trajektorienvektoren (x) Folgendes um-

fassen

einen Gelenkpositionsvektor ($x_1$),
einen Gelenkgeschwindigkeitsvektor ($x_2$) und/oder
einen Gelenkbeschleunigungsvektor ($x_3$).

7. Verfahren nach einem der vorhergehenden Ansprüche 1 bis 6, wobei die Basisfunktionen (A) und die Kerntensoren (G) auf einem Datensatz trainiert werden, der Gelenkdrehmomente (t) und entsprechende Trajektorien umfasst.

8. Verfahren nach Anspruch 7, wobei der Datensatz während einer Bewegung des Roboterarms gesammelt wird.

9. Verfahren nach Anspruch 7, wobei die Basisfunktionen (A) unter Verwendung eines Maximum-Likelihood-Ansatzes trainiert werden.

10. Verfahren nach einem der vorhergehenden Ansprüche 1 bis 9, wobei die berechneten Gelenkdrehmomente (t) durch Aktuatoren auf Gelenke des Roboterarms angewendet werden, um eine Vorwärtsregelung oder eine Rückkopplungssteuerung der Bewegung des Roboterarms auszuführen.

11. Steuereinrichtung zum Ausführen einer Steuerung einer Bewegung eines Roboterarms, der mehrere Freiheitsgrade (DoF) aufweist, **dadurch gekennzeichnet, dass** die Steuereinrichtung (1) Folgendes umfasst:

(a) einen Trajektoriengenerator (1A), welcher dazu konfiguriert ist, Trajektorienvektoren (x) bereitzustellen, die eine gewünschte Trajektorie spezifizieren, die eine Position, Geschwindigkeit und Beschleunigung des Roboterarms für jeden Freiheitsgrad (DoF) umfasst;
(b) eine Recheneinheit (1B), die angepasst ist, um die erzeugten Trajektorienvektoren (x) in entsprechende latente Darstellungsvektoren (a) abzubilden, welche inhärente Eigenschaften des Roboterarms unter Verwendung von Basisfunktionen (A) mit trainierten Parametern erfassen, wobei die Basisfunktionen (A) Funktionen sind, welche auf einem Datensatz trainiert werden, der Gelenkdrehmomente (t) und entsprechende Trajektorien des Roboterarms umfasst, und ferner dazu konfiguriert sind, die latenten Darstellungsvektoren (a) mit trainierten Kerntensoren (G) zu multiplizieren, um die Gelenkdrehmomente (t) für jeden Freiheitsgrad (DoF) zu berechnen, wobei die Anzahl der trainierten Kerntensoren (G) der Anzahl von Freiheitsgraden (DoF) des zu steuernden Roboterarms entspricht.

12. Steuereinrichtung nach Anspruch 11, wobei die Steuereinrichtung (1) mit Aktuatoren (2) verbunden ist, die durch die Steuereinrichtung (1) gesteuert werden, und dazu konfiguriert ist, die berechneten Gelenkdrehmomente (t) auf Gelenke des Roboterarms anzuwenden, um seine Bewegung zu steuern.

13. Robotersystem, umfassend mindestens einem Roboterarm, der Gelenke aufweist, auf welche Gelenkdrehmomente (t) durch Aktuatoren (2) angewendet werden, die das Robotersystem umfasst und die mit einer Steuereinrichtung (1) nach Anspruch 11 oder 12 verbunden sind und von dieser gesteuert werden.

14. Robotersystem nach Anspruch 13, wobei die Steuereinrichtung (1) angepasst ist, um eine Vorwärtsregelung oder eine Rückkopplungssteuerung der Bewegung des Roboterarms des Robotersystems auszuführen.

**Revendications**

1. Procédé pour calculer des couples d'articulation appliqués par des actionneurs afin de réaliser une commande d'un mouvement d'un bras de robot ayant plusieurs degrés de liberté (DoF),
**caractérisé en ce que** le procédé comprend les étapes :

(a) de fourniture (S11), par un générateur de trajectoire, de vecteurs de trajectoire (x) spécifiant une trajectoire souhaitée comprenant une position, une vitesse et une accélération du bras de robot pour chaque degré de liberté (DoF) ;
(b) de cartographie (S2) des vecteurs de trajectoire (x) en des vecteurs de représentation latents (a) correspondants qui capturent des propriétés inhérentes du bras de robot à l'aide de fonctions de base (A) avec des paramètres entraînés, dans lequel les fonctions de base (A) sont des fonctions qui sont entraînées sur un jeu de données comprenant des couples d'articulation (t) et des trajectoires correspondantes du bras de robot ;

(c) de multiplication (S3) des vecteurs de représentation latents (a) par des tenseurs de noyau entraînés (G) afin de calculer les couples d'articulation (t) pour chaque degré de liberté (DoF) dans lequel le nombre de tenseurs de noyau entraînés (G) correspond au nombre de degrés de liberté (DoF) du bras de robot devant être commandé.

2. Procédé selon la revendication 1 dans lequel chaque couple d'articulation (t) est calculé comme la somme sur le produit extérieur pondéré des vecteurs de représentation latents (a) .

3. Procédé selon la revendication 1 dans lequel chaque couple d'articulation (t) est calculé comme le produit intérieur pondéré des vecteurs de représentation latents (a).

4. Procédé selon l'une quelconque des revendications précédentes 1 à 3 dans lequel les fonctions de base (A) comprennent des fonctions de base continues.

5. Procédé selon la revendication 4 dans lequel les fonctions de base (A) comprennent

   des fonctions de base gaussiennes,
   des fonctions de base linéaires et/ou
   des fonctions de base polynomiales.

6. Procédé selon l'une quelconque des revendications précédentes 1 à 5 dans lequel les vecteurs de trajectoire (x) comprennent

   un vecteur de position d'articulation ($x_1$),
   un vecteur de vitesse d'articulation ($x_2$), et/ou
   un vecteur d'accélération d'articulation ($x_3$).

7. Procédé selon l'une quelconque des revendications précédentes 1 à 6 dans lequel les fonctions de base (A) et les tenseurs de noyau (G) sont entraînés sur un jeu de données comprenant des couples d'articulation (t) et des trajectoires correspondantes.

8. Procédé selon la revendication 7 dans lequel le jeu de données est collecté durant le mouvement du bras de robot.

9. Procédé selon la revendication 7 dans lequel les fonctions de base (A) sont entraînées à l'aide d'une approche de vraisemblance maximale.

10. Procédé selon l'une quelconque des revendications précédentes 1 à 9 dans lequel les couples d'articulation (t) calculés sont appliqués à des articulations du bras de robot par des actionneurs afin de réaliser une commande prédictive ou rétroactive du mouvement du bras de robot.

11. Dispositif de commande pour réaliser une commande d'un mouvement d'un bras de robot ayant plusieurs degrés de liberté (DoF) **caractérisé en ce que** ledit dispositif de commande (1) comprend :

    (a) un générateur de trajectoire (1A) qui est configuré pour fournir des vecteurs de trajectoire (x) spécifiant une trajectoire souhaitée comprenant une position, une vitesse et une accélération du bras de robot pour chaque degré de liberté (DoF) ;
    (b) une unité de calcul (1B) adaptée à cartographier les vecteurs de trajectoire (x) engendrés en des vecteurs de représentation latents (a) correspondants qui capturent des propriétés inhérentes du bras de robot à l'aide de fonctions de base (A) avec des paramètres entraînés, dans lequel les fonctions de base (A) sont des fonctions qui sont entraînées sur un jeu de données comprenant des couples d'articulation (t) et des trajectoires correspondantes du bras de robot, et configurée en outre pour multiplier les vecteurs de représentation latents (a) par des tenseurs de noyau entraînés (G) afin de calculer les couples d'articulation (t) pour chaque degré de liberté (DoF) dans lequel le nombre de tenseurs de noyau entraînés (G) correspond au nombre de degrés de liberté (DoF) du bras de robot devant être commandé.

12. Dispositif de commande selon la revendication 11, le dispositif de commande (1) étant connecté à des actionneurs (2) commandés par le dispositif de commande (1) et configurés pour appliquer les couples d'articulation (t) calculés à des articulations dudit bras de robot afin de commander son mouvement.

**13.** Système robotique comprenant au moins un bras de robot ayant des articulations auxquelles des couples d'articulation (t) sont appliqués par des actionneurs (2) compris dans le système robotique, et connecté à et commandé par un dispositif de commande (1) selon la revendication 11 ou la revendication 12.

**14.** Système robotique selon la revendication 13 dans lequel le dispositif de commande (1) est adapté à réaliser une commande prédictive ou rétroactive du mouvement du bras de robot dudit système robotique.

FIG 1

```
┌─────────────────┐
│                 │  S1
│                 │
└─────────────────┘
         │
         ▼
┌─────────────────┐
│                 │  S2
│                 │
└─────────────────┘
         │
         ▼
┌─────────────────┐
│                 │  S3
│                 │
└─────────────────┘
```

FIG 2

TG, 1A    $X_1, X_2, X_3$    CU, 1B    A, 2

T

1

# FIG 3

**EP 3 424 650 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160221189 A1